# EUROPEAN PATENT APPLICATION

(11) **EP 1 724 044 A1**
(43) Date of publication of application: **22.11.2006**
(21) Application number: 06250930.2
(22) Date of filing: 22.02.2006
(51) Int. Cl.: B23D 31/04, B22D 31/00, B02C 1/10, B02C 18/02

(54) **Method and apparatus for making a product from aluminium waste**

(30) Priority: 20.05.2005 JP 2005148648
(71) Applicant: Yuatsuki Co., Ltd, Aichi-pref, 444-0316 (JP)
(72) Inventor: Okuya, Yasuaki, Nishio-City Aichi-Pref 444-0305 (JP)
(74) Representative: Beresford, Keith Denis Lewis

(57) **Abstract**

The present invention is a method for making aluminum scrap into a product furnished with a trimming apparatus equipped with a pair of dies and cutters for cutting aluminum waste from an aluminum product held by a chuck, and a shearing apparatus provided with one cutting formation equipped with half-cut pyramid-shaped cutters and another cutting formation equipped with half-cut pyramid-shaped cutters facing the one cutting formation fitted to a frame equipped with an input opening for inputting aluminum scrap provided at a lower position and a discharge opening for discharging aluminum product raw material, wherein aluminum scrap cut by the trimming apparatus can be crushed or sheared to dimensions taken as aluminum product raw material utilized in shearing apparatus. As a result, the aluminum waste is cut from the aluminum casting completely automatically, and the cut aluminum waste can be adopted as aluminum product raw material.

## Description

### Technical Field

The present invention relates to a method for turning scrap aluminum into products by manufacture using shards (partially including crushing and breaking etc.) of aluminum scrap (including aluminum scrap and gunmetal scrap, etc.) and an apparatus therefor.

### Background Art

The current applicant has made a large number of applications relating to apparatus for crushing and breaking cast metal scrap in the related art. Examples of this are described in Japanese Laid-open patent No. Hei. 6-106083 entitled "an apparatus for crushing and breaking weirs, runners, and defective products for use in casting employing hydraulics" of, document (2), Japanese laid-open patent No. Hei. 6-182238 entitled "a method for crushing and breaking weirs, runners, and defective products etc. used in casting that become uneven", US patent no. 5, 791, 573 entitled "Crushing-Breaking apparatus", and European patent application no. 0865825 entitled "Method and apparatus for crushing-breaking long and slender weirs, runners, and other useless metal casting products.

### Disclosure of the Invention

Each of the prior art documents cited above is targeted on scraps of cast metal and is therefore technology for crushing/breaking by making clearance formed between left and right edge portions of one item and another item of a half-cut conical cutter large, and then utilizing this clearance. The reason for the necessity of ensuring this clearance dimension is as follows. Namely: (1) the providing of compatibility with cast strength and viscosity, (2) ensuring the appropriate size upon being carried in to the furnace, (3) ensuring durability of one and the other items of half-cut conical cutter, etc.

Ensuring the dimensions of this clearance can be considered to be a necessary evil. for the method for making aluminum waste into a product founded on shearing of aluminum at this time. The explanation for this reason is that: (a) it is possible to shear aluminum with only a slight amount of force. Much more force than that is therefore not necessary and is therefore not required in comparison with casting. Shredders of the related art are therefore useless and can therefore be considered to be wasteful of both resources and/or power. : (b) making products using shearing processing is ideal because the physical properties are soft. : (c) the load on the cutter is small, and a structure with the purpose of engaging strength is therefore not necessary. : (d) dimensions for aluminum product resources are not ensured because the clearance is large. : (e) there is resistance to efficient burning and to ensuring that the amount of gas generated at the time of this burning is small. Problems also remain with regards to sustaining the global environment. The above items are the main matters.

The present invention further improves aluminum shearing apparatus proposed by the current applicant, and provides improvements with regards to (a) to (e) described above by providing a method for manufacturing a product from aluminum scrap (aluminum scrap discharged by a die cast machine, spout, runner, weir, overflow scrap, shredder rubbish, and other scrap, etc.) based on the shearing of aluminum described above and providing an apparatus for this method for manufacturing a product.

By equalizing and/or standardizing the dimensions of shearing (crushing), the present invention improves smelting operation efficiency, resolution of hanging problems, improvement of combustion efficiency, and or economy of combustion resources, and alleviates harmful influences at the time of smelting.

By executing smelting of aluminum product raw materials in a rapid and reliable manner, functionality of an automatic die cast machine is improved, efficiency of smelting of this aluminum product raw material, and efficiency of factory operation is achieved, trouble involved for machine parts required for transport and fuel consumption of such machine parts is alleviated, pollution etc. is avoided, protection of the environment and effective use of resources is achieved, and the existence of mankind and the invigoration of future industry is achieved.

In one aspect of the invention, there is provided a method of making aluminum scrap into a product comprising the steps of providing a pair of dies and/or cutters provided at the dies for cutting aluminum scrap from an aluminum product provided at a trimming apparatus equipped with a chuck for supporting the aluminum product and cutting aluminum scrap such as a pouring cup, pouring gate, or runner, etc. using a cutter,
providing a shearing apparatus equipped with a substantially square-shaped frame provided with a one-side cutter formation equipped with an input opening and a constricting-shaped discharge opening and half-cut pyramid-shaped cutters arranged in a zigzag shape and an other side cutter formation equipped with half-cut pyramid-shaped cutters arranged in a zigzag shape facing the one-side cutter formation arranged below the trimming apparatus, crushing and shearing aluminum scrap inputted to the input opening of the shearing apparatus using the one-side cutter formation and/or the other side cutter formation, and discharging the crushed and/or sheared aluminum product raw materials from the discharge opening, and
crushing and/or shearing aluminum scraps cut by the trimming apparatus to appropriate dimensions for application as raw materials for an aluminum product by utilizing the one-side cutter formation and/or the other side cutter formation of the shearing apparatus.

This aspect is therefore characterized by (a) making it possible to provide a method for making aluminum scrap into a product capable of ensuring a slight force necessary for shearing aluminum scrap, capable of eliminating wastefulness of a method for making aluminum scrap into a product, and capable of avoiding waste of the earth's resources etc. and/or power, (b) making it possible to provide a method for making aluminum scrap into a product by utilizing physical softness in processing to achieve shearing so as to make this processing efficient, and (c) providing an optimum method for making aluminum scrap capable of relieving load on cutters, avoiding adoption of a structure taking as it's purpose forceful alignment, and capable of generating aluminum product raw materials. (d) It is possible to provide an optimum method for making aluminum waste into a product by providing a slight clearance for shearing use between the half-cut pyramid-shaped cutters of the one or other cutter formations that makes it possible to generate aluminum product raw materials. (e) There is therefore the advantage that it is possible to provide a method for making aluminum scrap into a product that is capable of ensuring dimensions as an aluminum product raw material, make combustion efficient and reduce gases generated at the time of combustion, and function effectively to maintain the global environment.

In a second aspect of the invention, there is provided apparatus for making aluminum scrap into a product comprising trimming apparatus positioned on an aluminum production line of a factory and shearing apparatus for crushing and/or shearing to dimensions appropriate for aluminum product source material provided below the trimming apparatus, wherein
the trimming apparatus is constructed from a chuck for holding an aluminum product and a pair of dies and/or cutters provided at the dies for cutting aluminum waste from an aluminum product held by the chuck,
the shearing apparatus comprises an other side cutter formation equipped with half-cut pyramid-shaped cutters arranged in a zigzag shape and an other side cutter formation equipped with half-cut pyramid-shaped cutters arranged in a zigzag shape facing the one-side cutter formation provided at a substantially square-shaped frame equipped with an input opening for inputting the aluminum waste and a constricting-shaped discharge opening for discharging crushed and/or sheared aluminum product raw material, and
the aluminum waste cut by the trimming apparatus is crushed or sheared by pyramid-shaped inclined surfaces provided at end side mountain sections and raised bottom sections projecting from half-cut pyramid-shaped cutters of one or other of the cutter formations, tool holders of the one or other of the cutter formations facing each end side mountain section of the one or other of the cutter formations, and the half-cut pyramid-shaped cutters of the one or other of the cutter formations facing each of the raised bottom sections of the one or other cutter formations, with this aluminum product raw material falling between a gap between the half-cut pyramid-shaped cutters of the one or other cutter formations.

This aspect is therefore characterized by (a - 1) making it possible to provide an apparatus for making aluminum scrap into a product capable of ensuring a slight force necessary for shearing aluminum scrap, capable of eliminating wastefulness of a method for making aluminum scrap into a product, and capable of avoiding waste of the earth's resources etc. and/or power, (b - 1) making it possible to provide an apparatus for making aluminum scrap into a product by utilizing physical softness in processing to achieve shearing so as to make this processing efficient, and (c - 1) providing an optimum apparatus for making aluminum scrap capable of relieving load with respect to cutters, avoiding adoption of a structure taking as it's purpose forceful alignment, and capable of generating aluminum product raw materials. (d - 1) It is possible to provide an optimum apparatus for making aluminum waste into a product by providing a slight clearance for shearing use between the half-cut pyramid-shaped cutters of the one or other cutter formations that makes it possible to generate aluminum product raw materials. (e - 1) There is therefore the advantage that it is possible to provide an apparatus for making aluminum scrap into a product that is capable of ensuring dimensions as an aluminum product raw material, make combustion efficient and reduce gases generated at the time of combustion, and function effectively to maintain the global environment.

In a third aspect of the invention, there are provided apparatus for making aluminum scrap into a product, wherein the trimming apparatus and/or shearing apparatus as disclosed in claim 2 are capable of being provided on the same frame from common machinery.

This aspect is therefore characterized by providing apparatus for making aluminum waste into a product with an appropriate construction for achieving the object of the previous aspect, being disposed in a compact manner, and enabling straightforward movement.

In a fourth aspect of the invention, there is provided apparatus for making aluminum scrap into a product, wherein the trimming apparatus and/or shearing apparatus disclosed in claim 2 are arranged in the vicinity of a foundry installation, so as to make effective use of installations and/or area within the foundry.

This aspect is therefore characterized by providing apparatus for making aluminum waste into a product with an appropriate construction for achieving the earlier object, achieving use of factory space, and ensuring free movement by people.

In a fifth aspect of the invention, there is provided apparatus for making aluminum scrap into a product, wherein the pair of dies are installed laterally, the dies are capable of opening and closing in a lateral direction, and the aluminum waste can be directly inputted to the following shearing apparatus.

This aspect is therefore characterized by providing apparatus for making aluminum waste into a product with an appropriate construction, achieving smooth transportation of aluminum waste and/or aluminum product raw materials, while achieving transportation with little noise.

Other aspects and features of the invention will become apparent from the following description.

### Brief Description of the Drawings

Embodiments of the invention will now be described in detail, with reference to the accompanying drawings, in which:
Figure 1 is a schematic view of the present invention installed in a factory;

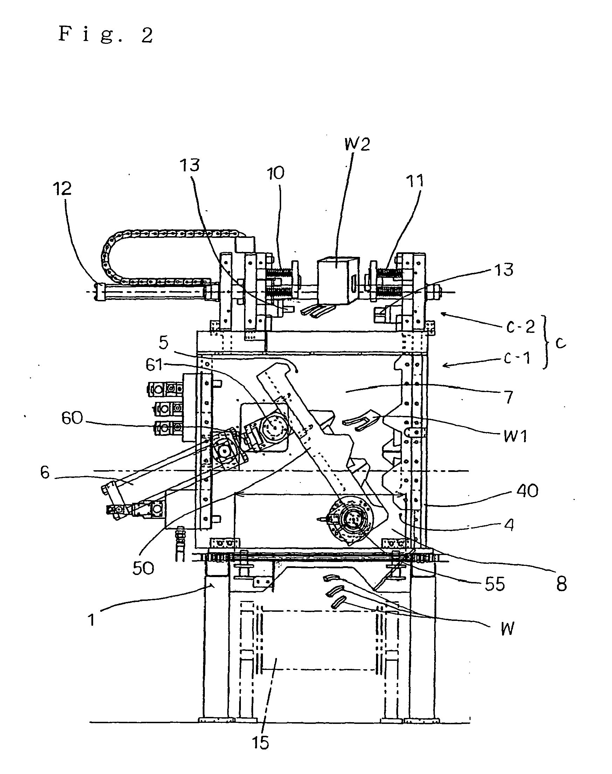

Figure 2 is an overall side view of an example of an apparatus for making aluminum waste into a product;

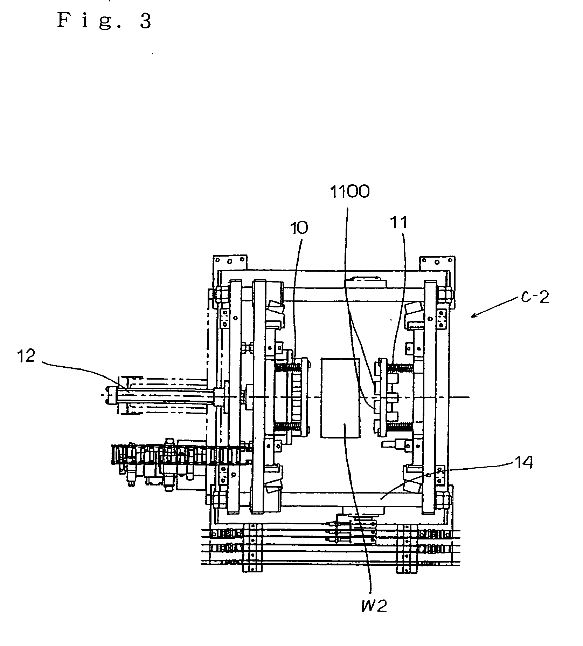

Figure 3 is a plan view of Figure 2;

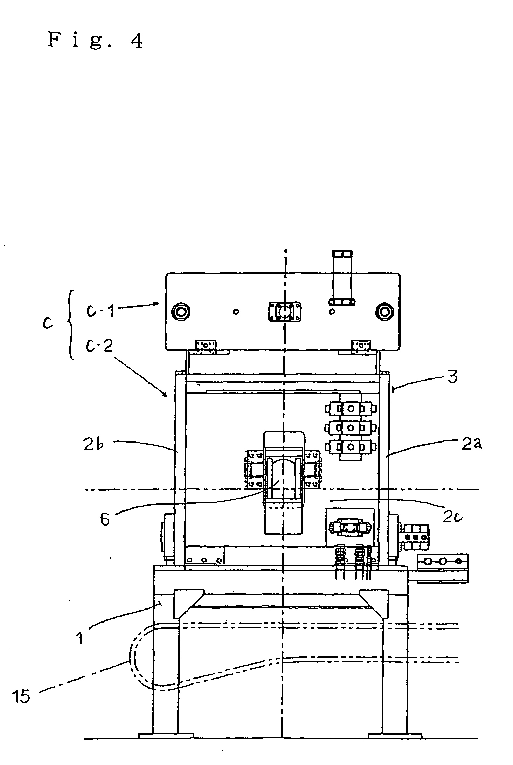

Figure 4 is a side view of one side of Figure 2;

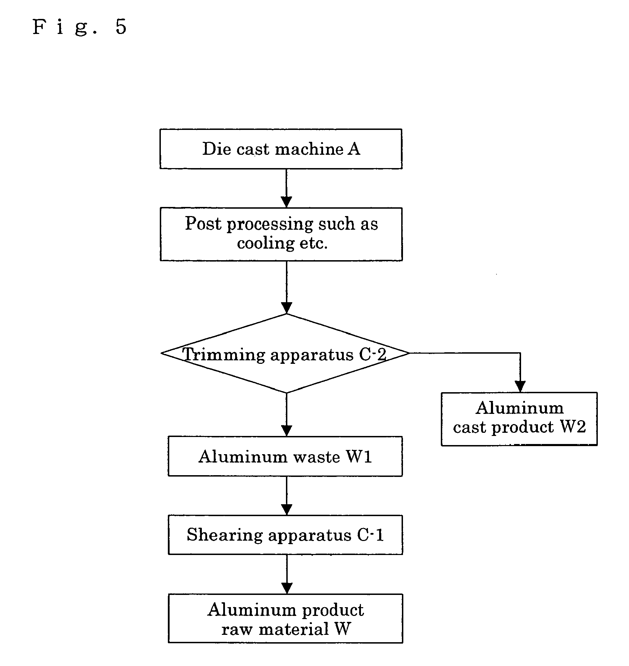

Figure 5 is a process view showing an example of a method for making aluminum waste into a product;

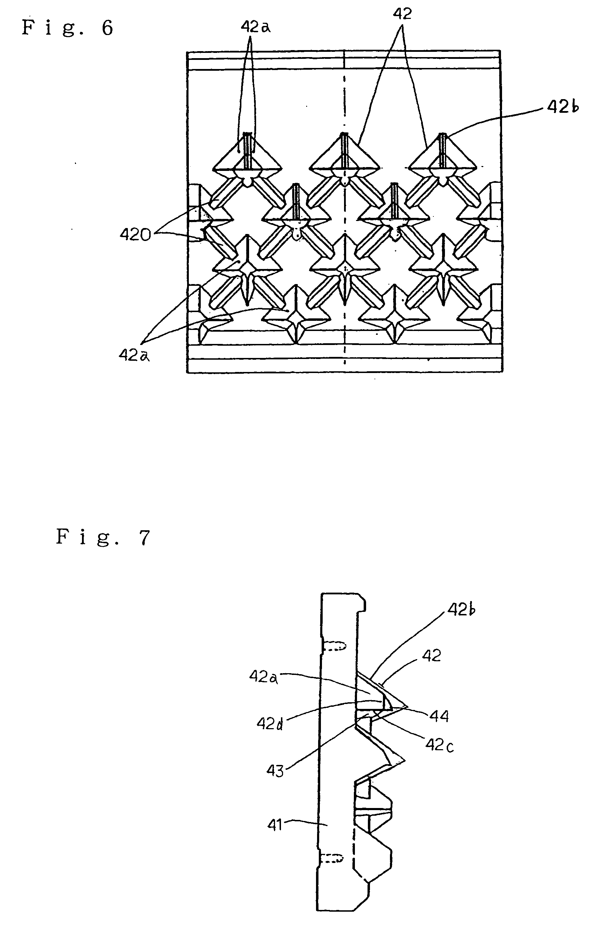

Figure 6 is a front view of an example of a one side cutter formation of an apparatus for making aluminum waste into a product;
Figure 7 is a side view of Figure 6;

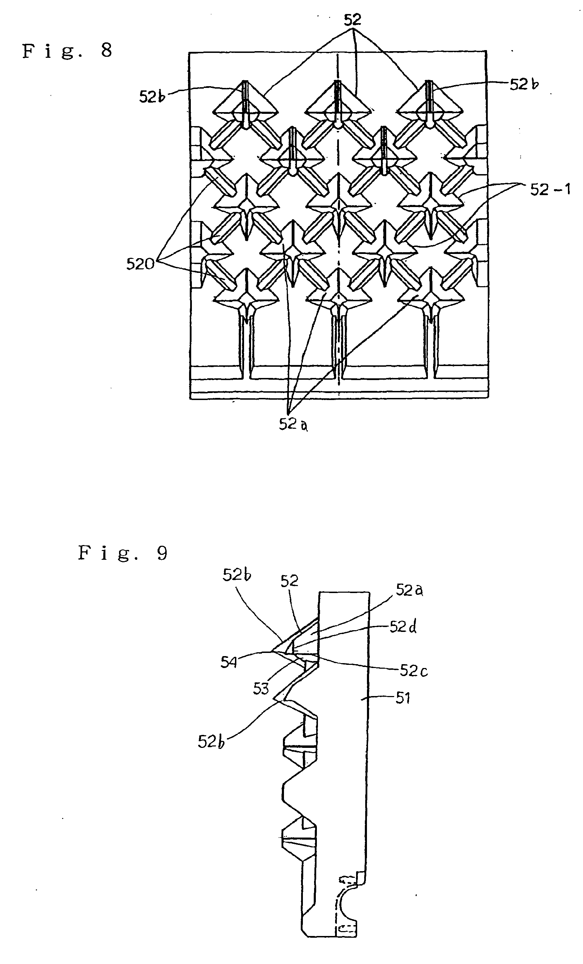

Figure 8 is a front view of an example of a one-side cutter formation of an apparatus for making aluminum waste into a product;
Figure 9 is a side view of Figure 8;

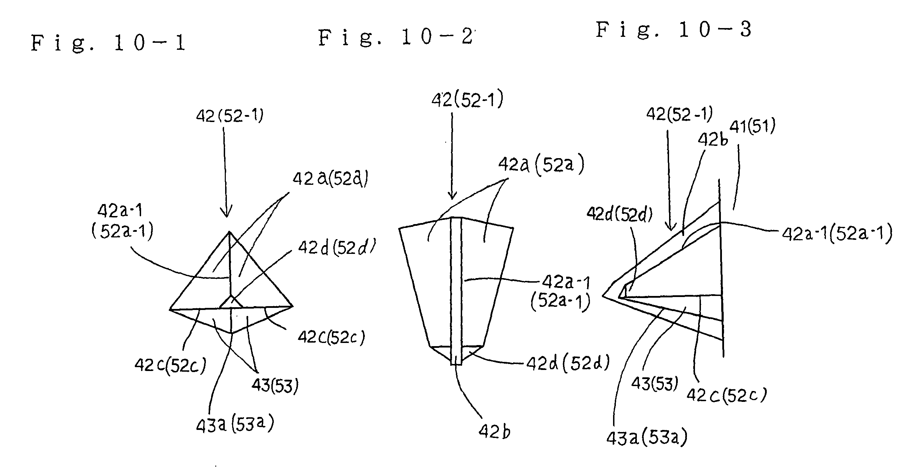

Figure 10-1 is a front view showing an enlarged view of the one/other half-cut pyramid-shaped cutters of the examples of Figure 6 and Figure 8;
Figure 10-2 is an overhead view of Figure 10-1;
Figure 10-3 is a side view of Figure 10-1;

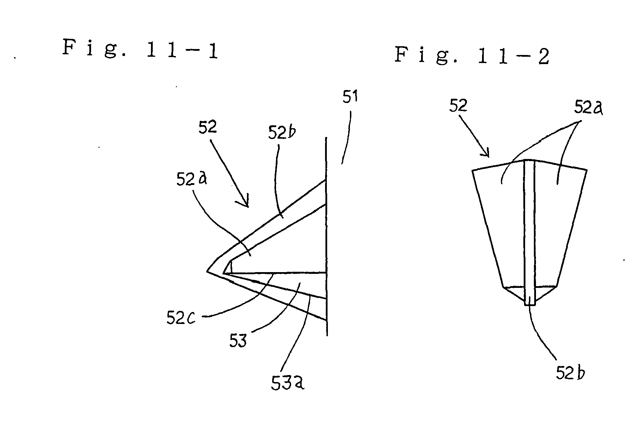

Figure 11-1 is a side view showing an enlarged example applied to a first stage and a second stage of the other side cutter formation of the other half-cut pyramid-shaped cutters of the example of Figure 8, and
Figure 11-2 is an overhead view of Figure 11-1;

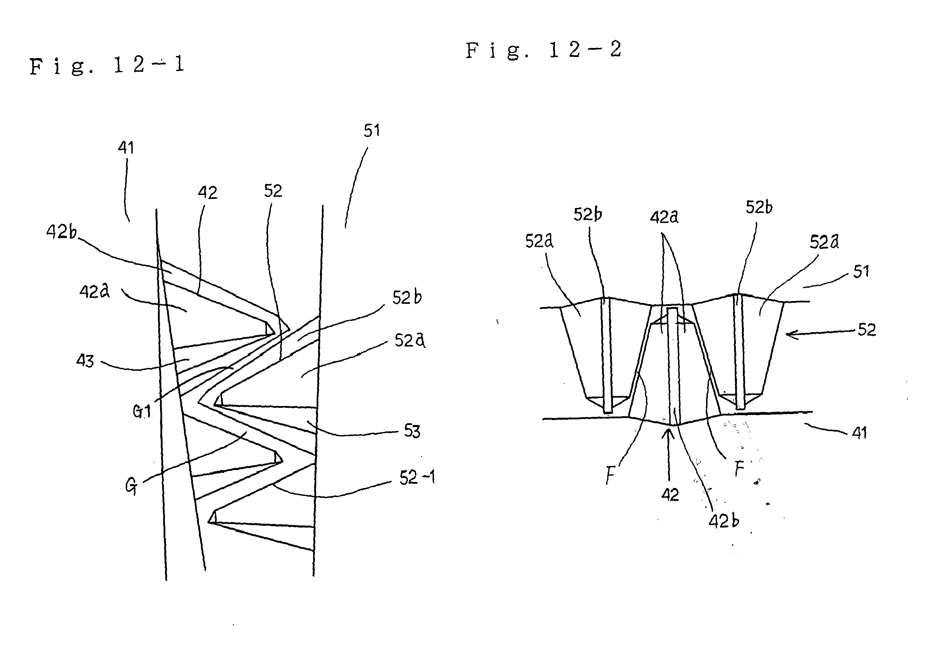

Figure 12-1 is an enlarged overhead view showing a relationship between matching of one and another half-cut pyramid-shaped cutter of the examples of Figure 6 and Figure 8; and
Figure 12-2 is a side view of Figure 12-1.

Next, a description is given of an example of the present invention.

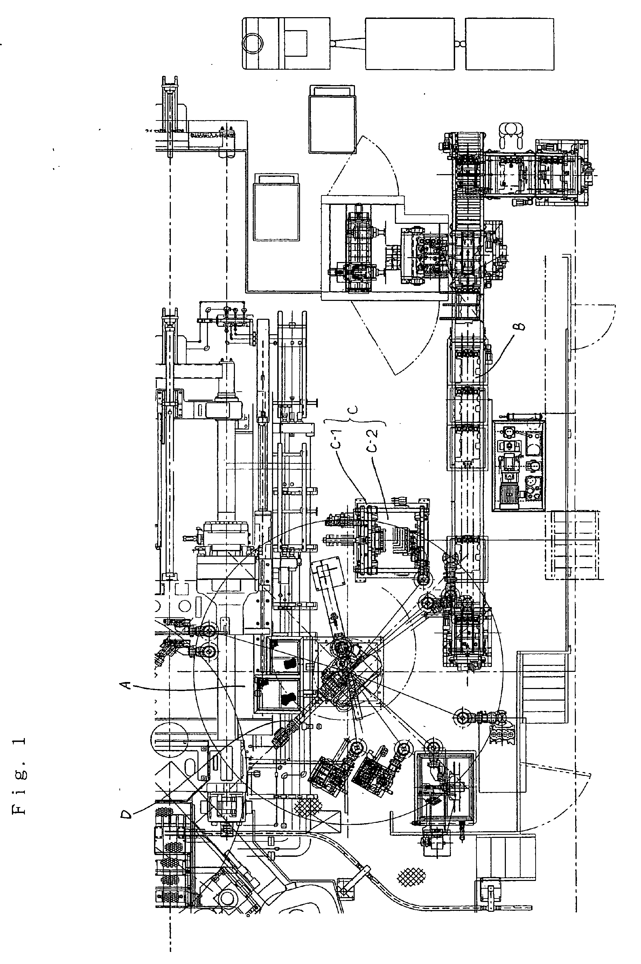

Giving a description based on Figure 1 showing an example of an outline of a foundry. Various facilities such as a die cast machine A, a cast equipment conveyor B, an apparatus C for making aluminum scrap into a product, a robot apparatus D, and cooling section etc. are provided at the foundry. In the foundry of the related art, for example, an aluminum scrap yard etc.. is provided as dead space. The present invention is based on the apparatus C for making aluminum scrap into a product being installed at this dead space.

The apparatus C for making aluminum scrap into a product is mainly comprised of a trimming apparatus C-2 provided at the top of a frame 1 and a shearing apparatus C-1 provided at a central stage of the frame 1 (directly below the trimming apparatus C-2 etc.).

Describing the shearing apparatus C-1 in detail, the main elements configuring the shearing apparatus C-1 are a frame 3 open at the top and bottom constructed of side plates 2a and 2b and cross-plates 2c, a one-side cutter formation 4 (fixed side) and an other side cutter formation 5 (moving side), and a cylinder 6 capable of advancing and retracting the other side cutter formation 5. An input opening 7 is formed from the free ends (upper ends) of the one-side cutter formation 4 and the other side cutter formation 5, and a discharge opening 8 is formed at the bases (lower sides) of the one-side cutter formation 4 and the other side cutter formation 5.

The one-side cutter formation 4 comprises a base plate 40 for fitting a tool holder provided at the frame 3, a tool holder 41 provided in a freely detachable manner at the base plate 40, and a multiplicity of (fixed side) half-cut pyramid-shaped cutters 42 provided in a zigzag shape at the tool holder 41. A pyramid-shaped inclined surface 42a of the half-cut pyramid-shaped cutter 42 is characterized by ensuring that sheared aluminum falls in a reliable and smooth manner, durability of the half-cut pyramid-shaped cutter 42 and maintenance of the shearing function, reliably shearing aluminum waste W1 and aluminum being processed (aluminum being processed), and grasping the aluminum waste W1 and the aluminum being processed (including aluminum not-yet processed). A bottom section top face 43a of a raised bottom section 43 is formed at a rear surface 42c of the half-cut pyramid-shaped cutter 42. The raised bottom section 43 and/or the bottom section top face 43a maintains a shearing function and achieves reliable shearing etc. of aluminum during processing using durability of the half-cut pyramid-shaped cutter 42 and a pyramid-shaped inclined surface 52a and/or inclined surface top surface 52a-1 of half-cut pyramid-shaped cutter 52 of the other side cutter formation 5 described later. Further, by providing an end side mountain section 44 at the end side 42d of the half-cut pyramid-shaped cutter 42 this may be utilized in splash prevention and/or for thrust during processing of the aluminum. Further, this end side mountain section 44 can therefore undertake to maintain a shearing function or achieve reliable shearing etc. of aluminum during processing using a tool holder 51 of the other side cutter formation 5 described later. The end side mountain section 44 prevents splashing of aluminum, maintains durability etc., and is taken to be from the upper part (of the input opening 7) to the second stage so as to take into consideration the shearing relationship with the tool holder 51 of the half-cut pyramid-shaped cutters 52.

The other side cutter formation 5 (moving side) comprises a base plate 50 for holding a tool holder provided at the frame 3, a tool holder 51 provided in a freely detachable manner at the base plate 50, and a multiplicity of (moving side) half-cut pyramid-shaped cutters 52 provided in a zigzag shape at the tool holder 51. A pyramid-shaped inclined surface 52a of the half-cut pyramid-shaped cutters 52 is characterized by shearing-processed aluminum falling in a reliable and smooth manner, maintaining of durability and a shearing function of the half-cut pyramid-shaped cutters 52, reliable shearing of the aluminum during processing, and grasping of aluminum during processing. A square-shaped projection 52b is formed at a top surface of the half-cut pyramid-shaped cutters 52. It is also possible to form square-shaped projections (not shown) at both bottom ends (or the rear surface) of the half-cut pyramid-shaped cutters 52. This projection 52b has the benefits of reliably shearing the aluminum during processing, and grasping aluminum during processing. It is also possible to form a bottom section top face 53a of a raised bottom section 53 at the rear surface 52c of the half-cut pyramid-shaped cutters 52, and by forming this bottom section top face 53a, the raised bottom section 53 and/or the bottom section top face 53a achieves durability of the half-cut pyramid-shaped cutters 52, maintenance of a shearing function and reliable shearing of aluminum during processing etc. using a pyramid-shaped inclined surface 42a of the half-cut pyramid-shaped cutters 42 of the one-side cutter formation 4 and/or the inclined surface top surface 42a-1. Further, by providing an end side mountain section 54 at the end side 52d, this may be utilized in splash prevention and/or for thrust during processing of the aluminum. By providing the half-cut pyramid-shaped cutters 52 up to the second stage above the other side cutter formation 5, the projection 52b is capable of preventing splashing of aluminum, maintaining durability etc., and maintaining the shearing relationship etc. with the tool holder 41 of the half-cut pyramid-shaped cutter 42. Further, this end side mountain section 54 can therefore undertake to maintain a shearing function or achieve reliable shearing etc. of aluminum during processing using a tool holder 41 of the other side cutter formation 4 described later. Further, 52-1 in the drawings is a half-cut pyramid-shaped cutter where a square-shaped projection 52b is not formed at the upper surface of the half-cut pyramid-shaped cutters 52, and as described previously, in this example this is provided at the second stage or below from the top of the other side cutter formation 5. The providing of a pyramid-shaped inclined surface 52a at half-cut pyramid-shaped cutters 52-1 etc. is the same.

The half cut pyramid-shaped cutters 52 of the other side cutter formation 5 is fitted with a slight clearance F (taken to be clearance F) between the half-cut pyramid-shaped cutters 42 of the one-side cutter formation 4. It is then possible to achieve maintenance of the durability and shearing function of the half-cut pyramid-shaped cutters 42 and 52 and shearing of aluminum and/or aluminum being processed is achieved. It is possible to maintain durability and shearing function of the half-cut pyramid-shaped cutters 42 and 52, reliable shearing of the aluminum during processing, and promote falling of the aluminum during processing etc. using a clearance G (taken to be clearance G) in a lateral direction formed between the pyramid-shaped inclined surface 42a of the half-cut pyramid-shaped cutters 42 and/or the raised bottom section 53 of the half-cut pyramid-shaped cutters 52, and a clearance G1 (taken to be clearance G1) in a lateral direction formed between a pyramid-shaped inclined surface 52a of the half-cut pyramid-shaped cutters 52 and/or the raised bottom section 43 of the half-cut pyramid-shaped cutters 42.

Although not shown in the drawings, a damper is provided in a freely opening and closing manner at a discharge opening 8. It is therefore possible to prevent clogging of the aluminum by means of the damper. This damper may be installed at either of the frame 1 of the shearing apparatus C-1, the one-side cutter formation 4, or the other side cutter formation 5.

Describing an example of means for moving the other side cutter formation 5, an end of a piston rod 60 of a cylinder 6 is pivoted at the upper side of a base plate 50 of the other side cutter formation 5. The other side cutter formation 5 is moved by extension and retraction of the piston rod 60. This movement has a lever movement mechanism taking a spindle 61 as a fulcrum, and a comparatively small force is therefore sufficient. As a result of advancement of the other side cutter formation 5, the half-cut pyramid-shaped cutters 52 of the other side cutter formation 5 and the half-cut pyramid-shaped cutter 42 of the one-side cutter formation 4 adopt an aligned relationship via the clearance F and the aluminum is sheared (cut). During this shearing, the dimensions of the gap of the clearance F plays an important role, and the shearing gap becomes of a dimension approximately close to zero. This shearing is extremely effective in post-processing of the aluminum.

A spindle 55 of the other side cutter formation 5 is supported by utilizing a bearing (not shown) and a support block fitting with a frame hole established at a frame. This spindle 55 is capable of being moved. When the aforementioned fitting relationship is adjusted using this movement, it is possible to adjust the size of the input opening 7 and/or the discharge opening 8, and to utilize this in adjusting the size and/or amount input for the aluminum waste W1 or adjust the size of the dimensions of aluminum product raw material W.

It is also possible to make the lower part of the one-side cutter formation 4 moveable.

Next, describing the details of the trimming apparatus C-2, the main structural elements of the trimming apparatus C-2 are another die 10 (moving die) provided in a moveable manner at the frame 1, one die 11 (fixed die) facing the other die 10, a cylinder 12 moving the other die 10, and cutters 13 provided at the other die 10 and/or the one die 11. The other die 10 advances forwards and retracts backwards utilizing the guide means 14 (for example, the guide rod and the support) provided at the frame 1. The one die 11 is equipped with a chuck 1100 for holding an aluminum cast product W2, for chucking the aluminum cast product W2 with sand attached conveyed at high temperature by a robot (not shown). Aluminum waste W1 accompanying the chucked aluminum cast product W2 is then cut (trimmed) using advancement of the other die 10 and/or the cutters 13. The trimmed aluminum waste W1 then falls (falls by utilizing the structure of positioning the shearing apparatus C-1 below the trimming apparatus C-2) into the insertion opening 7 of the shearing apparatus C-1 positioned below. This dropping method has the benefits of simplifying the apparatus, bringing about effective utilization of space, lowering costs, and avoiding damage to transport means (avoiding production line stoppages) etc. In this dropping method, the cutting locations form sharp cutters in the example of the aluminum waste W1. It is therefore possible to avoid situations where damage to the conveyor occurs easily so that, for example, there is no stopping of the production line, the rate of operation is improved, delivery delays are avoided, and cost increases can be avoided so as to ensure benefits with regards to factory management. This dropping method (with a configuration arranged directly below) is given as an example, and, for example, a lower side method, lateral direction method and/or a shooter method by a conveying means are also possible. This shooter method has the benefits of factory arrangement, effective utilization of space, and reduction of cost etc.

Next, describing an embodiment at a site, describing a process from input of the aluminum cast product W2 to the process where aluminum product raw material W is made at the trimming apparatus C-2 and the shearing apparatus C-1, and an example of effectiveness of the aluminum product raw material W, this aluminum cast product W2 is discharged from the die cast machine A. After this, for example, after post processing such as cooling etc. is carried out by the robot apparatus D, this is supported at the one die 11. The other die 10 supported in this state then advances, and the aluminum waste W1 is trimmed from this aluminum cast product W2 by the other die 11, the die 10 and/or the cutter 13. The aluminum waste W1 is processed by the shearing apparatus C-1 immediately after passing through the input opening 7 of the shearing apparatus C-1. Specifically, when the half-cut pyramid-shaped cutters 52 of the other side cutter formation 5 are in a retracted state, and the aluminum waste W1 is guided to an intake opening 7 formed by the half-cut pyramid-shaped cutters 52 (or the surface section) of the other side cutter formation 5 and the half-cut pyramid-shaped cutters 42 (or surface section) of the one-side cutter formation 4. After this, the other side cutter formation 5 moves along a circular arc trajectory so that the half-cut pyramid-shaped cutters 52 (pressing blades) of the other side cutter formation 5 and the half-cut pyramid-shaped cutters 42 (receiving blades) of the one-side cutter formation 4 fit, so that a shearing operation can be carried out. For example, the aluminum waste W1 is subjected to shearing by a plurality of operations in a large number of directions by each of the members such as between the projections 52b of the half-cut pyramid-shaped cutters 52 of the other side cutter formation 5 and/or the raised bottom section 53, the projections 42b of the half-cut pyramid-shaped cutters 42 of the one-side cutter formation 4 and/or the bottom section 43, and the pyramid-shaped inclined surface 52a of the half-cut pyramid-shaped cutters 52 of the other side cutter formation 5 and/or the inclined surface top surface 52a-1, and the end side mountain sections 54 and 44 and the tool holders 51 and 41 of the other side cutter formations 5 and 4. It is therefore possible to achieve reliable shearing etc. of the aluminum waste W1 and/or aluminum being processed (the one-side cutter formation 4 and the other side cutter formation 5 are referred to collectively). Shearing takes place reliably and efficiently because the clearance F constructed by the projection 52b and the projection 42b is extremely narrow. The projection 52b and projection 42b function to prevent dropping of the aluminum waste W1 and aluminum being processed. The projection 52b and the projection 52b catch the aluminum waste W1 inputted from the input opening 7, and also perform the role of preventing aluminum waste W1 and aluminum being processed from coming out from the discharge opening 8.Rib blades 520 and 420 crossing between the large number of projections 52b and projections 42b and the half-cut pyramid-shaped cutters 52, and between the half-cut pyramid-shaped cutters 42 have the same operation as the projections 52b and 42b. The end side mountain sections 54 and 44 of the half-cut pyramid-shaped cutters 52 and 42 have a shearing and pressing in effect, perform the role of preventing splashing, and bring about effective shearing. The sheared aluminum product raw material W is conveyed from the discharge opening 8 by the conveying means 15 to an appropriate location and/or furnace.

## Claims

1. A method of making aluminum scrap into a product comprising the steps of providing a pair of dies and/or cutters provided at the dies for cutting aluminum scrap from an aluminum product provided at a trimming apparatus equipped with a chuck for supporting the aluminum product and cutting aluminum scrap such as a pouring cup, pouring gate, or runner, etc. using a cutter,
providing a shearing apparatus equipped with a substantially square-shaped frame provided with a one-side cutter formation equipped with an input opening and a converging discharge opening and half-cut pyramid-shaped cutters arranged in a zigzag shape and an other side cutter formation equipped with half-cut pyramid-shaped cutters arranged in a zigzag shape facing the one-side cutter formation arranged below the trimming apparatus, crushing and shearing aluminum scrap inputted to the input opening of the shearing apparatus using the one-side cutter formation and/or the other side cutter formation, and discharging the crushed and/or sheared aluminum product raw materials from the discharge opening, and
crushing and/or shearing aluminum scraps cut by the trimming apparatus to appropriate dimensions for application as raw materials for an aluminum product by utilizing the one-side cutter formation and/or the other side cutter formation of the shearing apparatus.

2. An apparatus for making aluminum scrap into a product comprising trimming apparatus positioned on an aluminum production line of a factory and shearing apparatus provided below the trimming apparatus for crushing and/or shearing to dimensions appropriate for aluminum product source material, wherein
the trimming apparatus is constructed from a chuck for holding an aluminum product and a pair of dies and/or cutters provided at the dies for cutting aluminum waste from an aluminum product held by the chuck,
the shearing apparatus comprises an other side cutter formation equipped with half-cut pyramid-shaped cutters arranged in a zigzag shape and an other side cutter formation equipped with half-cut pyramid-shaped cutters arranged in a zigzag shape facing the one-side cutter formation provided at a substantially square-shaped frame equipped with an input opening for inputting the aluminum waste and a constricting-shaped discharge opening for discharging crushed and/or sheared aluminum product raw material, and
the aluminum waste cut by the trimming apparatus is crushed or sheared by pyramid-shaped inclined surfaces provided at end side mountain sections and raised bottom sections projecting from half-cut pyramid-shaped cutters of one or other of the cutter formations, tool holders of the one or other of the cutter formations facing each end side mountain section of the one or other of the cutter formations, and the half-cut pyramid-shaped cutters of the one or other of the cutter formations facing each of the raised bottom sections of the one or other cutter formations, with this aluminum product raw material falling between a gap between the half-cut pyramid-shaped cutters of the one or other cutter formations.

3. An apparatus for making aluminum scrap into a product, wherein the trimming apparatus and/or shearing apparatus as disclosed in claim 2 are capable of being provided on the same frame from common machinery.

4. An apparatus for making aluminum scrap into a product, wherein the trimming apparatus and/or shearing apparatus disclosed in claim 2 are arranged in the vicinity of a foundry installation of an iron foundry, so as to make effective use of installations and/or area within the foundry.

5. An apparatus for making aluminum scrap into a product, wherein the pair of dies disclosed in claim 2 are installed on a frame, the dies are capable of opening and closing in a lateral direction, and the aluminum waste can be directly inputted to the following shearing apparatus.

6. An apparatus (C) for recycling scrap aluminium, comprising:
trimming apparatus (C-2) comprising:
a chuck (10, 11) for holding a workpiece; and
a cutter (13) for cutting a scrap portion from a workpiece held by the chuck; and shearing apparatus (C-1) comprising;
a substantially vertically extending fixed plate (4) having a cutting face;
a movable plate (5) extending upwardly from a generally horizontal pivot axis (55) arranged parallel to and spaced from a lower part of the cutting face of the fixed plate to define a discharge opening (8) between the lower edges of the fixed and movable plates, and the movable plate (5) having a cutting face opposed to the cutting face of the fixed plate;
the fixed plate and the movable plate having spaced upper edges defining an input opening (7) and being generally downwardly convergent, and both plates having a plurality of cutting teeth (42, 52) positioned on their respective cutting faces so as to interdigitate when the movable plate is pivoted towards the fixed plate;
wherein the trimming apparatus (C-2) is mounted above the shearing apparatus (C-1) so the material cut from the workpiece by the cutter (13) may fall through the input opening (7) into a space between the fixed and movable plates (4, 5).

7. An apparatus according to claim 6, wherein the cutting teeth (42, 52) are of truncated pyramid form, and have their end faces (42d, 52d) formed with downwardly-facing sections (44, 54) adapted to prevent movement of scrap material from between the fixed and movable plates (4, 5) in the direction of the input opening (7).

8. An apparatus according to claim 6 or claim 7, wherein the cutting teeth (42, 52) adjacent the upper edges of the fixed and movable plates (4, 5) comprise a rectangular-section rib (42b, 52b) extending from the free end of the cutting tooth along its apex facing towards the upper edge of the respective plate.
